# FASCICULE DE BREVET EUROPEEN

(11) **EP 4 255 802 B1**
(45) Date de publication et mention de la délivrance du brevet: **05.02.2025**
(21) Numéro de dépôt: 21840086.9
(22) Date de dépôt: 06.12.2021
(51) Int. Cl.: B63H 9/067, B63H 9/06

(54) **VOILE DE BATEAU**
SEGEL FÜR BOOT
BOAT SAIL

(30) Priorité: 07.12.2020 FR 2012777
(43) Date de publication de la demande: 11.10.2023
(73) Titulaire: Sachs, Christophe, 92380 Garches (FR)
(72) Inventeur: Sachs, Christophe, 92380 Garches (FR)
(74) Mandataire: Ipsilon
(86) Numéro de dépôt international: PCT/FR2021/052216
(87) Numéro de publication internationale: WO 2022/123161

(56) Documents cités:
- FR-A2- 2 607 104
- GB-A- 912 909
- US-A- 4 702 190
- US-A1- 2003 213 421
- US-B1- 6 237 521

## Description

La présente invention concerne une voile de bateau du type voile membrane, équipée de panneaux solaires, et de lattes.

Le document EP2439133 décrit une voile membrane comportant deux feuilles de matière plastique fixées l'une à l'autre après interposition de fils revêtus d'adhésif durci à la chaleur.

Il existe des voiles membranes comportant entre les deux feuilles de matière plastique un réseau de fibres rayonnant à partir d'un coin de la voile. Il existe des voiles membranes comportant plusieurs réseaux de fibres rayonnant chacun d'un coin de la voile, de sorte que les fibres des différents réseaux s'entrecroisent.

Le brevet FR2676984 décrit, pour une voile d'avant, des lattes disposées parallèlement à l'étai de support de voile pour faciliter l'enroulement de la voile autour de l'étai.

Il existe des voiles membranes qui présentent, entre leurs deux feuilles de matière plastique transparente, des panneaux solaires pour fournir de l'électricité au poste de pilotage. Ces panneaux se présentent sous forme de films photovoltaïques, d'épaisseur très faible.

L'un des buts de l'invention est de proposer une voile modifiée pour lui assurer flexibilité et résistance en cas de vent fort.

Un autre but de l'invention est de proposer une voile modifiée pour offrir flexibilité et résistance aux films photovoltaïques, en particulier pour leur éviter une pliure lors de l'enroulement de la voile, sur l'étai pour une voile d'avant, ou sur le mât pour une grand-voile.

Un autre but encore de l'invention est d'apporter à la voile une meilleure résistance grâce au biomimétisme.

L'invention a pour objet une voile de bateau, du type voile membrane constituée de deux feuilles de matière plastique transparente entre lesquelles sont disposés : au moins un réseau de fibres de renforcement, des films photovoltaïques et des lattes, caractérisée en ce qu'elle comporte au moins une zone dépourvue de lattes et de films photovoltaïques, en forme de triangle curviligne, dont un côté est situé sur le bord arrière de la voile et dont le sommet, opposé audit côté est situé sur le bord avant de la voile.

Selon un mode de réalisation, le côté du triangle curviligne de la zone est situé sur le bord, vertical au repos, de la voile, entre le point bas du bord et approximativement le tiers de la hauteur du bord vertical, et le sommet est situé sur le bord avant de la voile lié à l'étai, en un point situé sensiblement au tiers de la hauteur de l'étai en partant de son point bas de fixation.

Selon un mode de réalisation, la voile comporte plusieurs triangles curvilignes répartis sur la hauteur de la grand-voile, dont les côtés sont situés sur le bord arrière de la grand-voile et les sommets sur le bord avant fixé au mât.

Selon un mode de réalisation, la voile comporte un réseau complémentaire de fibres de renforcement, disposé à la manière du réseau de nervures de l'aile de libellule.

Selon un mode de réalisation, la voile est fixée sur un étai gonflable pour assurer l'enroulement de la voile.

### Brève description des dessins

[Fig. 1] représente une voile d'avant triangulaire selon l'invention, apte à être enroulée sur l'étai.
[Fig. 2] représente une grand-voile apte à être enroulée sur le mât.
[Fig. 3] représente une voile sensiblement triangulaire, apte à être enroulée sur la bôme.

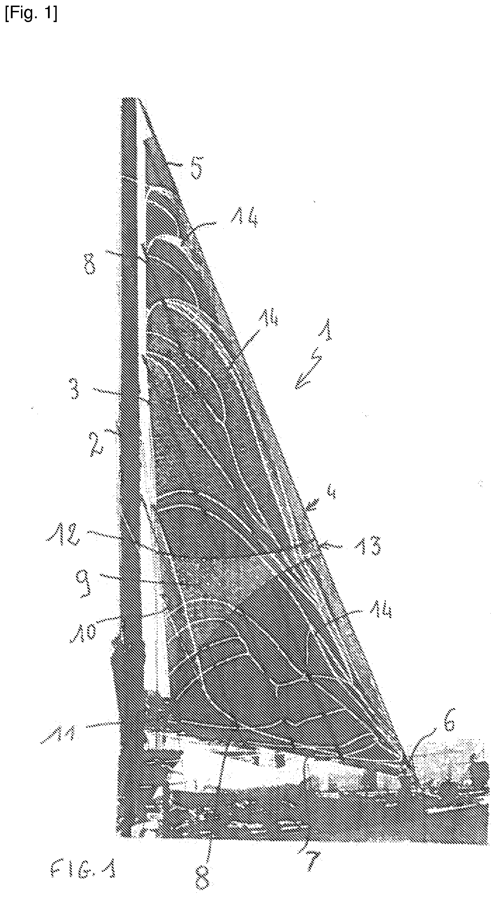

Sur la figure 1, la voile d'avant 1 d'un bateau est triangulaire, elle est portée par le mât 2, le long duquel elle présente un bord 3 sensiblement vertical au repos. Le bord avant 4 de la voile 1 est lié à l'étai 5 présentant un point bas 6 de fixation sur le bateau. Le troisième bord 7 de la voile est sensiblement horizontal. La voile 1 est une voile membrane, constituée de deux feuilles de matière plastique transparente entre lesquelles sont disposés au moins un réseau de fibres de renforcement (non représenté), des films photovoltaïques (non représentés) et des lattes 8 parallèles à l'étai 5.

Selon l'invention la voile 1 comporte une zone 9 dépourvue de lattes 8 et de films photovoltaïques. La zone 9 est en forme de triangle curviligne, dont un côté 10 est situé sur le bord 3, vertical au repos, de la voile 1. Le côté 10 du triangle curviligne de la zone 9 est disposé entre le point bas 11 du bord vertical 3 de la voile 1 et un point 12 situé approximativement au tiers de la hauteur du bord vertical 3 de la voile 1. Le sommet 13 du triangle curviligne de la zone 9, opposé au côté 10, est situé sur le bord avant 4 de la voile 1 lié à l'étai 5, en un point situé sensiblement au tiers de la hauteur de l'étai 5 en partant de son point bas 6 de fixation. Les deux côtés du triangle curviligne de la zone 9, placés entre le sommet 13 et le côté 10, sont incurvés vers l'intérieur du triangle curviligne.

La zone 9 est dépourvue de films photovoltaïques, et les lattes 8 s'étendent à l'extérieur de la zone 9 mais sont absentes dans la zone 9. La zone 9 facilite la mise en place initiale de la voile 1 sur l'étai. En cas de gros vent, la zone 9 est un absorbeur de torsions.

Selon une disposition particulière de l'invention, l'étai 5 est gonflable au moment d'assurer l'enroulement de la voile 1. Au cours de cet enroulement, la zone 9 assure flexibilité et résistance aux films photovoltaïques des autres parties de la voile, pour leur éviter une pliure.

Selon une autre caractéristique de l'invention, la voile 1 comporte un réseau complémentaire de fibres 14 de renforcement disposé entre les deux feuilles de matière plastique de la voile membrane. Ce réseau complémentaire de fibres 14 de renforcement reproduit par biomimétisme, le réseau de nervures de l'aile de libellule, le point bas 6 de fixation de l'étai 5 sur le bateau symbolisant le point de fixation de l'aile au corps de la libellule. Les fibres 14 de renforcement ont des parcours sensiblement curvilignes, ce qui favorise leur interaction avec le réseau, ou les réseaux, de fibres rayonnant à partir d'un coin, ou de coins, de la voile. Le biomimétisme est accentué par le fait que le sommet 13 du triangle curviligne de la zone 9 correspond sur l'aile de libellule au point d'articulation des deux moitiés longitudinales de l'aile lors de la dernière mue de la libellule.

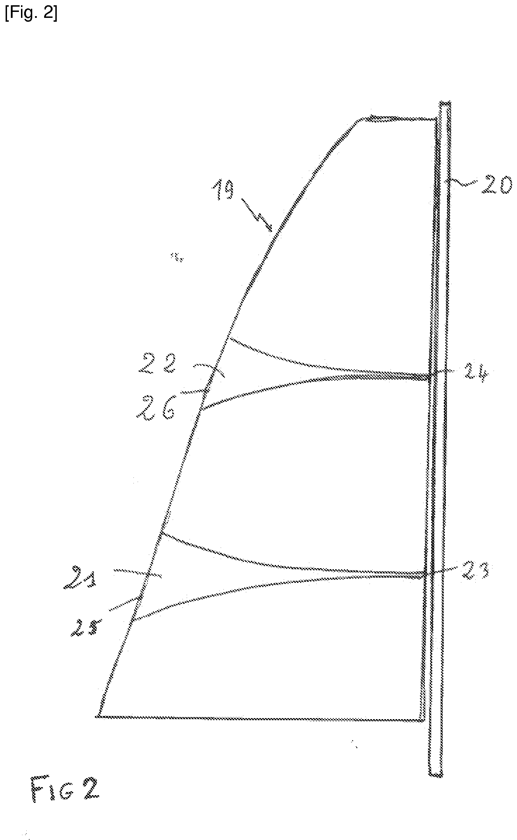

L'exemple de réalisation de la Figure 2 permet de représenter certains aspects de l'invention dans le cas d'une grand-voile 19 apte à être enroulée sur un mât 20. Les lattes et les films photovoltaïques ne sont pas représentés. La grand-voile comporte, dans cet exemple, deux triangles curvilignes 21, 22, répartis sur la hauteur de la grand-voile 19. Chacun de ces triangles curvilignes 21, 22, présente un sommet 23, 24 sur le bord avant de la grand-voile 19, et un côté 25, 26, opposé au sommet 23, 24, sur le bord arrière de la grand-voile 19.

Dans le cas d'une grand-voile 19 enroulable sur le mât 20, des lattes sensiblement parallèles au mât 20 sont disposées dans la grand-voile 19 et sont interrompues au niveau des triangles curvilignes 21, 22. Cette disposition permet de faciliter la mise en place de la grand-voile 19 sur le mât 20.

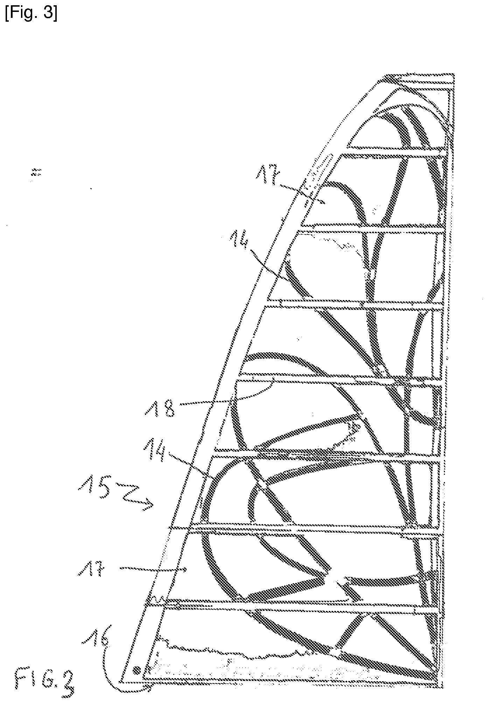

L'exemple de réalisation de la Figure 3 permet de représenter certains aspects de l'invention dans le cas d'une grand-voile 15 apte à être enroulée sur une bôme 16. Entre les deux feuilles de matière plastique transparente de la voile membrane, les réseaux de fibres de renforcement classiques ne sont pas représentés. Les films 17 photovoltaïques sont constitués sous la forme de quadrilatères à deux côtés parallèles à la bôme 16, séparés par des bandes 18 de liaison des feuilles de la voile membrane. Les bandes 18 peuvent contenir des lattes. Le réseau complémentaire des fibres 14 de renforcement définit un schéma de fixation des feuilles de la voile. Les films photovoltaïques 17 sont découpés au laser le long des fibres 14 du réseau complémentaire pour assurer le collage des deux feuilles de la voile membrane à travers les films 17.

En dehors des bandes de fixation réciproque des deux feuilles de la voile membrane, les films photovoltaïques peuvent être disposés sur pratiquement toute la surface de la voile.

Les films 17 photovoltaïques sont assemblés en série ou en parallèle pour l'alimentation du bateau en électricité. Ils sont translucides, et laissent passer la lumière vers les films disposés dans des voiles parallèles à la voile 15 ou masquées par la voile 15.

## Revendications

1. Voile (1, 15, 19) de bateau, du type voile membrane constituée de deux feuilles de matière plastique transparente entre lesquelles sont disposés : au moins un réseau de fibres de renforcement, et des lattes (8), **caractérisée en ce qu'**entre les deux feuilles de matière plastique transparente sont disposés des films photovoltaïques (17), **en ce que** la voile comporte au moins une zone (9) dépourvue de lattes et de films photovoltaïques, en forme de triangle curviligne (21, 22), dont un côté (10, 25, 26) est situé sur le bord (3, 19) arrière de la voile et dont le sommet (13, 23, 24), opposé audit côté (10, 25, 26) est situé sur le bord (4) avant de la voile .

2. Voile selon la revendication 1, du type voile d'avant (1) **caractérisée en ce que** le côté (10) du triangle curviligne de la zone (9) est situé sur le bord (3), vertical au repos, de la voile (1), entre le point bas (11) du bord (3) et approximativement le tiers de la hauteur du bord (3) vertical, et le sommet (13) est situé sur le bord avant (4) de la voile (1) destiné à être lié à l'étai (5), en un point situé sensiblement au tiers de la hauteur de l'étai (5) en partant de son point bas (6) de fixation.

3. Voile selon la revendication 1 du type grand-voile, **caractérisée en ce qu'**elle comporte plusieurs triangles curvilignes (21, 22) répartis sur la hauteur de la grand-voile (19), dont les côtés (25, 26) sont situés sur le bord arrière de la grand-voile (19) et les sommets (23, 24) sur le bord avant fixé au mât (20).

4. Voile (1) selon la revendication 1, **caractérisée en ce qu'**elle comporte un réseau complémentaire de fibres (14) de renforcement, disposé à la manière du réseau de nervures de l'aile de libellule.

5. Voile selon la revendication 2, **caractérisée en ce que** la voile (1) est destinée à être fixée sur un étai (5) gonflable pour assurer l'enroulement de la voile (1).

## Patentansprüche

1. Segel (1, 15, 19) für Boot, vom Typ Membransegel, bestehend aus zwei transparenten Kunststofflagen, wozwischen Folgende angeordnet sind: mindestens ein Netz aus Verstärkungsfasern und Latten (8), **dadurch gekennzeichnet, dass** zwischen den zwei transparenten Kunststofflagen photovoltaische Filme (17) angeordnet sind, dass das Segel mindestens einen Bereich (9) umfasst, der frei von Latten und photovoltaischen Filmen ist, in Form eines krummlinigen Dreiecks (21, 22), dessen eine Seite (10, 25, 26) sich an dem hinteren Rand (3, 19) des Segels befindet und dessen Scheitelpunkt (13, 23, 24) gegenüber der Seite (10, 25, 26) sich an dem vorderen Rand (4) des Segels befindet.

2. Segel nach Anspruch 1, vom Typ Vorsegel (1), **dadurch gekennzeichnet, dass** die Seite (10) des krummlinigen Dreiecks des Bereichs (9) sich an dem in Ruhezustand vertikalen Rand (3) des Segels (1) zwischen dem Tiefpunkt (11) des Rands (3) und ungefähr einem Drittel der Höhe des vertikalen Rands (3) befindet, und der Scheitelpunkt (13) sich an dem vorderen Rand (4) des Segels (1) befindet, der dazu bestimmt ist, mit dem Stag (5) verbunden zu sein, an einem Punkt, der sich ausgehend von seinem unteren Befestigungspunkt (6) im Wesentlichen in einem Drittel der Höhe des Stags (5) befindet.

3. Segel nach Anspruch 1 vom Typ Großsegel, **dadurch gekennzeichnet, dass** es mehrere über die Höhe des Großsegels (19) verteilte krummlinige Dreiecke (21, 22) umfasst, deren Seiten (25, 26) sich an dem hinteren Rand des Großsegels (19) und deren Scheitelpunkte (23, 24) sich an dem am Mast (20) befestigten vorderen Rand befinden.

4. Segel (1) nach Anspruch 1, **dadurch gekennzeichnet, dass** es ein komplementäres Netz aus Verstärkungsfasern (14) umfasst, das wie das Rippennetz des Libellenflügels angeordnet ist.

5. Segel nach Anspruch 2, **dadurch gekennzeichnet, dass** das Segel (1) dazu bestimmt ist, an einem aufblasbaren Stag (5) befestigt zu sein, um das Aufrollen des Segels (1) zu gewährleisten.

## Claims

1. A boat sail (1, 15, 19) in the form of a membrane sail made up of two transparent plastic sheets between which are arranged: at least one network of reinforcing fibers and battens (8), **characterized in that** photovoltaic films (17) are arranged between the two transparent plastic sheets, **in that** the sail comprises at least one zone (9) free of battens and photovoltaic films, in the shape of a curvilinear triangle (21, 22), one side (10, 25, 26) of which is located on the aft edge (3, 19) of the sail and the vertex (13, 23, 24) of which, opposite said side (10, 25, 26), is located on the leading edge (4) of the sail.

2. The sail according to claim 1, in the form of a headsail (1), **characterized in that** the side (10) of the curvilinear triangle of the zone (9) is located on the edge (3), vertical at rest, of the sail (1), between the bottom point (11) of the edge (3) and approximately one third of the height of the vertical edge (3), and the vertex (13) is located on leading edge of (4) the sail (1) intended to be connected to the stay (5), at a point approximately one third of the height of the stay (5) from its bottom attachment point (6).

3. The sail according to claim 1, in the form of a mainsail, **characterized in that** it comprises several curvilinear triangles (21, 22) spread over the height of the mainsail (19), the sides (25, 26) of which are located on the aft edge of the mainsail (19) and vertices (23, 24) on the leading edge attached to the mast (20).

4. The sail (1) according to claim 1, **characterized in that** it comprises a further network of reinforcing fibers (14), arranged in the manner of the network of veins of a dragonfly wing.

5. The sail according to claim 2, **characterized in that** the sail (1) is intended to be attached to an inflatable stay (5) for furling the sail (1).
